# EUROPÄISCHE PATENTSCHRIFT

(11) **EP 2 694 283 B1**
(45) Veröffentlichungstag und Bekanntmachung des Hinweises auf die Patenterteilung: **22.03.2017**
(21) Anmeldenummer: 11711583.2
(22) Anmeldetag: 01.04.2011
(51) Int. Cl.: B32B 13/08, C04B 28/14, D21H 17/70

(54) **KARTON MIT OPTIMIERTER GIPSKERNHAFTUNG**
CARDBOARD HAVING OPTIMIZED GYPSUM CORE ADHESION
CARTON À NOYAU DE PLÂTRE À ADHÉSION OPTIMISÉE

(43) Veröffentlichungstag der Anmeldung: 12.02.2014
(73) Patentinhaber: Knauf Gips KG, 97346 Iphofen (DE)
(72) Erfinder: FREY-MATSUYAMA, Shoko, 80336 München (DE)
(74) Vertreter: Zech, Stefan Markus
(86) Internationale Anmeldenummer: PCT/EP2011/055088
(87) Internationale Veröffentlichungsnummer: WO 2012/130325

(56) Entgegenhaltungen:
- EP-A2- 1 027 970
- US-A- 2 530 986
- US-A- 4 327 146
- US-A- 4 470 877
- US-A1- 2004 038 065
- US-A1- 2005 161 853

## Beschreibung

Die vorliegende Erfindung betrifft ein Verfahren zur Herstellung eines Papiers oder Kartons ausgehend von einem Brei mit Cellulosefasern. Die Erfindung betrifft auch ein Papier oder Karton, insbesondere zur Verwendung in einer Gipskartonplatte. Außerdem betrifft die Erfindung eine Gipsplatte, umfassend einen Gipskern, und ein an den Gipskern umhüllenden Papier oder Karton. Ebenso betrifft die Erfindung ein Verfahren zur Herstellung einer solchen Gipsplatte.

Ein Verfahren zur Herstellung von Papier wird zum Beispiel in der DE 11 2004 001 313 T5 beschrieben. Ein Füllstoffe enthaltender Papierfaserbrei wird mit einer vorgegebenen Konsistenz in einem Formbereich einer Papiermaschine eingespeist, dem Papierfaserbrei Wasser dadurch entzogen, dass der Papierfaserbrei durch eine wasserdurchlässige Basis, beispielsweise ein Langgitter, entwässert und eine derart hergestellte Papierbahn getrocknet und aufgerollt wird, um ein fertiges Papierprodukt herzustellen. Insbesondere wird dabei vorgeschlagen, dass der Papierfaserbrei mit bestimmten Füllstoffen hergestellt wird, u.a. auf Basis von Kalziumhydroxid (Ca(OH)₂). Damit wird erreicht, dass bestimmte Eigenschaften, z.B. optische Eigenschaften und die Stärke des hergestellten Papiers, in der gewünschter Weise beeinflusst werden können.

Gipsplatten bestehen typischerweise aus einem Gipskern, der sich zwischen zwei Papieren oder Kartonbahnen befindet. Bei der Produktion werden dabei zwei Karton- oder Papierrollen abgerollt und der Zwischenraum mit einer Stuckgipssuspension gefüllt. Der Stuckgipssuspension sind in der Regel diverse Zusatzstoffe beigesetzt, etwa Stärke, ein Tensid, ein Abbindebeschleuniger etc.

Ein als Überzugspapier für Gipsplatten geeignetes Papier wird z.B. in der EP 0521804 beschrieben. Dort wird vorgeschlagen, dass das Papier mit einer Pigmentschicht überzogen ist, die auf zumindest einem mineralischen Füllstoff von heller Farbe beruht und zumindest ein Bindemittel aufweist. Durch die dort beschriebene Beschichtung soll dabei eine besondere Reißfestigkeit des Papiers erreicht werden, womit es z.B. ermöglicht ist, dass Papiertapeten ohne Zerreißen des beschichteten Papiers von diesem entfernt werden können.

Karton wird zu Papier in verschiedenen Quellen unterschiedlich abgegrenzt: Teilweise wird Karton als Papier mit einer größeren Dicke bezeichnet, andere Quellen reden von Karton erst, wenn mehrere (Papier-)Lagen vorliegen. Im folgenden wird aus Gründen der besseren Lesbarkeit teilweise nur von Karton geredet, wobei damit aber auch dünnes und/oder einlagiges Papier gemeint sein kann.

Bei der Herstellung der Gipsplatten wird die Rohplatte, bestehend aus den beiden Kartonlagen und der Gipssuspension z.B. durch eine Formstation geführt und auf einem Abbindeband und schließlich auf einem Rollenförderertransportiert. Während dieses Transports findet das "Abbinden" statt, d.h. das Calciumsulfat Hemihydrat (CaSO₄ ½H₂O) wird wieder zu Calciumsulfat Dihydrat (CaSO₄ 2H₂O). Die so entstandene Platte wird mit einem geeigneten Messer bzw. einer Schere vereinzelt und in einen Mehretagentrockner geführt. Die Plattentrockner arbeiten dabei typischerweise mit einem starken Luftstrom, der quer zur Transportrichtung oder längs geleitet wird.

Die Gipsplatten sind beim Transport in den Trockner noch nass, es ist also eine erste wichtige Anforderung an den Karton, dass er eine hohe Nasshaftung aufweist und nicht vom Gipskern im Trocknungsprozess bei Beaufschlagung mit zum Teil starken Luftströmen abgeblasen wird. Die Nasshaftung kann z.B. dadurch erreicht werden, dass beim Herstellprozess die wässrige Gipssuspension in den Karton penetriert und dass dann dort in der Celluloseschicht Gipsnadeln kristallisieren. Die Gipsnadeln stellen einen mechanischen Verbund zwischen Plattenkern und Karton dar. Die Geschwindigkeit der Abbindung legt dabei im Wesentlichen die erreichbare Produktionsgeschwindigkeit fest. Um eine hohe Produktionsgeschwindigkeit zu erreichen, kann die Abbindung z.B. durch Zugabe von feinstem Dihydrat als Kristallisationskeim in die Gipssuspension beschleunigt werden. Bei schneller Abbindung muss der Penetrationsprozess der Stuckgipssuspension in den Karton dabei ebenso schnell erfolgen. Manchmal wird der Karton über Brennern aufgeheizt und im Rahmen der Abkühlung beim Auftrag der Gipssuspension das Penetrationsverhalten des Kartons verbessert.

Eine weitere wichtige Anforderung an den Karton ist die Haftung an dem Gipskern im trockenen Zustand, denn in diesem Zustand sind die Gipskartonplatten gebrauchsfertig. Um eine hohe Trockenhaftung zu erzielen, gibt man der Gipssuspension eine Stärke, z.B. Kartoffel- oder Maisstärke bei. Die Stärke ist evtl. vorverkleistert und wasserlöslich. Im Strom des verdampfenden Überschusswassers im Plattentrockner gelangt die Stärke in die Grenzschicht zwischen Karton und Gipskern und wirkt dort wie ein Kleister bzw. Klebstoff.

Zusammenfassend ist also die Haftung des Kartons an den Gipskern, sowohl im nassen als auch im trockenen Zustand, von besonders großer Bedeutung.

In der DE 101 39 420 A1 wird ein Verfahren zur Herstellung von Gipsplatten vorgestellt, wobei nach dem Auftragen der Stuckgipsslurry auf die untere Kartonbahn vor dem Abbinden mindestens eine der Kartonbahnen an der dem Gips abgewandten Seite mit Unterdruck beaufschlagt wird. Dadurch sollen im Bereich des Kartons entstehende Gasblasen zerstört werden und hierdurch die Kontaktfläche zwischen Karton und Gips vergrößert und der Verbund somit verbessert werden.

In der DE 197 43 385 A1 wird eine Gipsplatte mit einem Unterkarton, einem Oberkarton und einer zwischen den beiden Kartonlagen angeordneten Gipsschicht vorgestellt, wobei mindestens eine der beiden Kartonlagen mit einer vor dem Abbinden der Gipsschicht hergestellten Strukturprägung versehen ist. Die durch die Strukturprägung an der zur Gipsmasse hin weisenden Innenseite ausgeprägten Vertiefungen bzw. Erhebungen werden von der noch weichen Gipsmasse vollständig ausgefüllt, so dass nach Erhärten der Gipsschicht die Strukturierung der Kartonlage sicher erhalten bleibt. Die an der Innenseite ausgeprägten Erhebungen und Vertiefungen sollen dabei den Vorteil haben, dass im Vergleich zu ebenen Kartonlagen eine wesentlich bessere Verbindung zwischen Gipsschicht und Kartonlage erhalten wird.

In der Praxis hat sich gezeigt, dass es trotz der vorgenannten Maßnahmen, den Karton mit einer guten Trocken- und Nasshaftung am Gipskern zu versehen, weiterhin ein Problem ist, dass sich der Karton im Herstellungsprozess der Gipsplatte oder auch danach während der Lebensdauer der Gipsplatte vom Gipskern ablösen kann. Darüber hinaus erfordern die bekannten Maßnahmen aufwändige Änderungen am Produktionsverfahren. Bei der DE 101 39 420 A1 ist es erforderlich, dass die Produktionsanlagen derart umgerüstet werden, damit sie ein Mittel zur Absaugung, z.B. einen Saugkasten oder eine Saugwalze aufnehmen können. Bei der DE 197 43 385 A1 muss das Papier mit einer Strukturprägung versehen werden, was ebenfalls nur mit aufwändigen zusätzlichen Verfahrensschritten möglich ist.

Es ist daher eine Aufgabe der vorliegenden Erfindung, ein Papier oder einen Karton bereitzustellen, der intensiv mit dem Gipskern im Rahmen der Herstellung von Gipsplatten verbunden ist.

Es ist eine weitere Aufgabe der vorliegenden Erfindung, ein Papier oder einen Karton bereitzustellen, der bei der Produktion einer Gipsplatte in besonders einfacher Weise stabil an dem Gipskern haftet, und zwar sowohl an der Nassplatte als auch an der gebrauchsfertigen Platte.

Die genannten Aufgaben werden nach einem Aspekt der Erfindung gerade dadurch gelöst, dass dem Brei vor der Papier- oder Kartonbildung Gips beigemischt wird und das aus dem Brei gebildete Papier oder der aus dem Brei gebildete Karton bei einer Temperatur von über 110°C, insbesondere bei einer Temperatur von über 130°C, so getrocknet wird, dass sich im Papier oder Karton Calciumsulfat Hemihydrat bildet.

Erfindungsgemäß wird also dem Brei Gips bzw. Stuckgips als Füllstoff des Papiers oder Kartons hinzugefügt. Es versteht sich, dass zur Erhöhung der Festigkeit oder der Haftungseigenschaften oder Erreichung optischer oder sonstiger Zwecke erfindungsgemäß dem Brei hierbei auch zusätzlich weitere Materialien zugefügt werden können. Anders als bei einer prinzipiell ebenfalls möglichen, nachträglichen Aufbringung von Gips bzw. Stuckgips auf eine Lage des Papiers bzw. Kartons wird mit dem hier vorgeschlagenen Verfahren eine besonders tiefe Verankerung des Gipses in der Papier- bzw. Kartonlage erzielt.

Bei der Kartonherstellung durchläuft der Karton typischerweise eine Trocknungszone mit hohen Temperaturen. Hierbei tritt eine Teilentwässerung der Gipskristalle in der dünnen Kartonschicht auf, wobei sich ein Karton mit einer Stuckgipsfüllung ergibt. Dies ist ein überraschendes Ergebnis der Erfindung, braucht man doch für den Kalziniervorgang von Gipsen hohe Temperaturen von min. 150 °C. Die winzigen Gipskristalle in der dünnen Kartonschicht sind aber sehr temperaturempfindlich und werden daher im Trocknungsregime entwässert.

Die Stuckgipskristallite im Karton sind reaktiv und bilden mit Wasser schnell wieder Gips. Man hat so einen Karton mit sog. "Linkern" bzw. Ankerkristallen erzeugt, der besonders vorteilhafte Haftungseigenschaften aufweist. Schon das auftreffende Wasser beim Prozess der Herstellung der Gipsplatten führt zur Gipsbildung im Karton, wobei die sich bildenden Nadeln besonders gut im Kartongefüge verankert sind. Sie verwachsen im Grenzbereich Karton - Gipskern intensiv mit den sich bildenden Nadeln des Gipskerns, woraus die gute Nass- und Trockenhaftung resultiert.

In einer Ausgestaltung der Erfindung handelt es sich bei der Trocknung bei über 110°C, vorzugsweise bei über 130°C, um einen Verfahrensschritt der Papier- oder Kartonbildung. Beim Herstellungsprozess durchläuft Papier üblicherweise eine "Trockenpartie", in der die endgültige Entwässerung stattfindet. Dabei läuft die Papierbahn typischerweise durch eine Anzahl dampfbeheizter Trockenzylinder und wird anschließend geglättet und aufgerollt. Dieser sowieso notwendige Herstellungsschritt lässt sich also gleichzeitig auch zur Bildung des Calciumsulfat Hemihydrat verwenden. Damit lässt sich der erfindungsgemäße Karton somit besonders effizient, insbesondere auch energieeffizient, ohne zusätzlich notwendigen Verfahrensschritt herstellen.

In einer weiteren Ausgestaltung der Erfindung weist das getrocknete Papier oder der Karton einen Anteil Calciumsulfat Hemihydrat im Bereich von 10% bis 90%, vorzugsweise im Bereich von 20% bis 60%, weiter vorzugsweise im Bereich von 25% bis 35%, auf. Experimente haben gezeigt, dass dieser Gehalt an Calciumsulfat Hemihydrat besonders gut geeignet ist, um eine hohe Trocken- und Nasshaftung zu erreichen. Es wird damit eine enge Verwachsung der Gipsnadeln im Karton und des Gipskerns ermöglicht.

In einer weiteren Ausgestaltung der Erfindung wird dem Brei vor der Papier- oder Kartonbildung Gips in Form einer Gipssuspension beigemischt. Gips hat eine Löslichkeit von 2,5 g/Liter Wasser, bei Mehrzugabe hat man feinste Gipskristalle in H₂O in Form einer Suspension vorliegen. Als Gipssuspension ist der Gips besonders einfach zu handhaben und kann mit dem Cellulosebrei vermischt werden.

Bei der gesättigten Gipssuspension unter Beimischung in den Brei vor der Papier- oder Kartonbildung handelt es sich bevorzugtermaßen um eine kontinuierlich gerührte Gipssuspension, wobei die Gipskonzentration bezogen auf das Gewicht im Bereich von 10% bis 70%, vorzugsweise im Bereich von 30% bis 50%, liegt.

Es ist weiterhin möglich, dem Brei Stärke und/oder Latex zur Modfikation zuzusetzen.

In einer weiteren Ausgestaltung der Erfindung liegt der Gips als REA-Gips, gemahlener REA-Gips oder feingemahlener Naturgips oder in einer Mischung aus gemahlenen/ungemahlenen REA-Gips und feingemahlenem Naturgips vor. Prinzipiell sind insofern mindestens die folgenden Optionen hinsichtlich der Zugabe von Gips in den Brei vor der Papier- oder Kartonbildung denkbar: Es wird ausschließlich ungemahlener REA-Gips verwendet; es wird ausschließlich gemahlener REA-Gips verwendet; es wird ausschließlich gemahlener Naturgips verwendet; es wird eine Mischung aus gemahlenem und ungemahlenem REA-Gips verwendet; es wird eine Mischung aus gemahlenem Naturgips und ungemahlenem REA-Gips verwendet; es wird eine Mischung aus gemahlenem Naturgips und gemahlenem REA-Gips verwendet. Bei REA-Gips kann es insbesondere vorteilhaft sein, den REA-Gips ungetrocknet im Anfallzustand zu verwenden. Die Verwendung von Naturgips ist insbesondere dann vorteilhaft, wenn die Gipsplatten (und somit auch die Grenzschicht Gipskern-Karton) in gewissem Umfang biegbar sein sollen. Da die Anordnung der Gipskristalle bei Naturgips chaotischer ist als bei REA-Gips, kann sich hier bei Naturgips eine höhere Stabilität ergeben.

In einer bevorzugten Ausgestaltung der Erfindung wird der Gips über ein Retentionsmittel, insbesondere kationisches Polyacrylamid, an die Cellulosefasern gebunden. In einer weiteren Ausgestaltung der Erfindung wird der Gips elektrostatisch mit den Cellulosefasern verbunden. Ohne die Verwendung eines Retentionsmittels bzw. einer elektrostatischen Anbindung kann es unter Umständen ein Problem sein, dass der Gips nur wenig Affinität zu den Fasern des Papiers bzw. Kartons besitzt. Somit kann es vorkommen, dass der Gips beim Entwässern des Papiers zusammen mit dem Siebwasser aus dem Papier bzw. Karton entweicht.

Nach einem weiteren Aspekt der vorliegenden Erfindung wird insofern auch ein Karton, vorzugsweise hergestellt nach dem vorstehend beschriebenen Verfahren, beansprucht, wobei dieses Papier oder der Karton insbesondere zur Verwendung in einer Gipskartonplatte vorgesehen sein kann. Das Papier oder der Karton zeichnet sich dadurch aus, dass das getrocknete Papier oder der getrocknete Karton, bezogen auf das Gewicht, einen Calciumsulfat-Hemihydratanteil im Bereich von 10% bis 90%, vorzugsweise im Bereich von 20% bis 60%, insbesondere im Bereich von 25% bis 35%, aufweist.

In einer weiteren Ausgestaltung der Erfindung weist der Karton eine Grammatur im Bereich von 160 - 230 g/m² auf. Es hat sich gezeigt, dass Grammaturen in diesem Bereich besonders gut geeignet sind, um Gipsplatten zu stabilisieren, gleichzeitig aber noch kostengünstig herzustellen sind.

Gemäß der Erfindung weist der Karton mehrere Lagen auf. Insbesondere werden häufig 3-lagige, 5-lagige und manchmal auch 7-lagige Kartons verwendet. Hiermit kann eine besonders hohe Stabilität des Kartons erzielt werden. Insbesondere ist es auch möglich, dass die mehreren Lagen unterschiedlich strukturiert sind, je nachdem, ob sie im montierten Zustand dem Gipskern zu- oder abgewandt sind. Für die dem Gipskern zugewandte Seite ist eine hohe Trocken- und Nasshaftung mit dem Gipskern wichtig. Für die dem Gipskern abgewandte Seite kann das optische Erscheinungsbild dagegen von besonderer Bedeutung sein. Es kann auch vorgesehen sein, dass z.B. eine Tapete auf dem Karton angebracht werden soll. Für die Lage auf der dem Gipskern abgewandten Seite des Kartons können Tapetenhaftungseigenschaften also von besonderer Bedeutung sein. Da Tapete nicht mehr ohne weiteres von dem Karton abgelöst werden kann, wird typischerweise vor der Anbringung der Tapete grundiert. Zu betonen ist in diesem Zusammenhang allerdings, dass vor allem die dem Gipskern zugewandte Lage mit dem Hemihydrat-Füllstoff ausgestattet sein muss.

Es kann auch vorgesehen sein, dass die Lagen an der Oberfläche des Kartons auf besonders hohe Festigkeit ausgerichtet sind, während die inneren Lagen auf Volumen optimiert sind.

Da Gipsplatten bei Dauerbefeuchtung oder hoher Luftfeuchtigkeit an Stabilität verlieren kann es vorteilhaft sein, dass die nach außen gewandte Lage des Kartons wasserabweisend ist bzw. wasserabweisend beschichtet wird. Da erfindungsgemäß der Karton selber auch Stuckgips enthält, kann dies im vorliegenden Fall von besonderer Bedeutung sein.

Gemäß der Erfindung weisen die mehreren Lagen des Kartons unterschiedliche Calciumsulfat Hemihydrat-Anteile auf. Es weist dabei eine Lage, die sich an der Oberfläche des Kartons befindet, einen höchsten Anteil an Calciumsulfat Hemihydrat auf. Es soll ja eine Verwachsung der Gipsnadeln aus dem Karton mit Gipsnadeln aus dem Gipskern ermöglicht werden. Hierfür ist die dem Gipskern zugewandte Lage des Kartons (die sich also an der Oberfläche des Kartons befindet) von besonderer Bedeutung. Gerade in dieser Lage ist ein hoher Anteil an Calciumsulfat Hemihydrat erwünscht. Insbesondere kann es vorgesehen sein, dass von den mehreren Lagen des Kartons nur diese Oberflächenlage überhaupt Calciumsulfat Hemihydrat aufweist.

Ein Karton gemäß dieser Ausgestaltung kann also z.B. so hergestellt werden, dass eine Oberflächenlage des Kartons hergestellt wird basierend auf einem Brei mit Cellulosefasern, dem vor der Papierbildung Gips beigemischt wurde. Die anderen Lagen werden dagegen auf herkömmliche Weise ohne Beimischung von Gips hergestellt. Der Karton wird dann so auf dem Gipskern befestigt, dass die gipshaltige Lage sich auf der dem Gipskern zugewandten Seite befindet. Erfindungsgemäße Kartone können auf Ober- und Unterseite sowie auch auf den Seitenflächen des Gipskerns angebracht werden. Die Erfindung ist dabei auch nicht auf besondere Formen des Gipskerns beschränkt, bezieht sich als auch auf z.B. gekrümmte Gipskerne.

Es wird insofern auch eine Gipsplatte, umfassend einen Gipskern und zumindest ein an den Gipskern angebrachtes Karton als unabhängiger Aspekt beansprucht, wobei der Karton mit Calciumsulfat-Hemihydrat gefüllt ist und nach dem in Anspruch 1 definierten Verfahren hergestellt worden ist. Dabei ist ein unabhängiger Aspekt darin zu sehen, dass gerade auf der dem Gipskern zugewandten Seite des Papiers oder des Kartons ein Calciumsulfat-Hemihydratanteil bezogen auf das Gewicht des getrockneten Kartons im Bereich von 10% bis 90%, vorzugsweise im Bereich von 20% bis 60%, weiter vorzugsweise im Bereich von 25% bis 35% vorgesehen ist, um eine möglichst effiziente Verankerung zwischen Papier und/oder Karton und Gipskern zu erzielen.

Nach der vorliegenden Erfindung wird der Gips bereits dem Brei mit Cellulose-Fasern (Pulpe) vor der Papier- oder Kartonmischung beigemischt.

Weiterhin wird unabhängig ein Verfahren zur Herstellung einer Gipsplatte beansprucht, das sich durch die folgenden Schritte auszeichnet:
- Formen eines Gipskerns aus einer Stuckgips-Slurry,
- Bereitstellen eines Kartons nach einem der Ansprüche 10 bis 12,
- Herstellen einer Gipsplatte aus dem Gipskern und dem Papier oder Karton, wobei die die Gipsslurry ummantelnden Kartonbahnen stuckgipsgesättigtes Wasser aus der Gipsslurry aufsaugen und sich hierbei die im Karton befindlichen Stuckgipskörner unter Ausbildung von "Linker-Kristallen" in Calciumsulfat-Dihydrat umwandeln, wobei parallel hierzu Calciumsulfat-Dihydrat aus der stuckgipsgesättigten Lösung kristallisiert und wobei die sich im Karton ausbildenden Linker-Kristalle als Kristallisationskeime fungieren.

Entscheidend ist, dass am Ende eine Gipsplatte definiert ist, die sich dadurch auszeichnet, dass Gipskern und Karton an ihrer Grenzschicht durch Ankerkristalle miteinander verbunden sind, wobei die Ausbildung der Ankerkristalle daraus resultiert oder zumindest dadurch begünstigt wird, dass der Karton zuvor mit Gips verfüllt bereitsgestellt wurde.

Die Erfindung wird nachstehend auch hinsichtlich weiterer Merkmale und Vorteile anhand der Beschreibung zweier Ausführungsbeispiele weiter illustriert.

Gemäß einem Ausführungsbeispiel eines erfindungsgemäßen Kartons wird ein Gelbkarton bereitgestellt, der vorgesehen ist, auf der Sichtseite eines Gipskerns angeordnet zu werden. Dieser Gelbkarton weist drei Papierschichten auf, von denen nur bei einer Schicht, die sich auf der Unterseite des Kartons befindet, bei der Herstellung dem Cellulose-Brei Gips beigemischt wurde. Die Paperschichten in der Mitte sowie auf der dem Gipskern abgewandten Seite weisen dagegen keinen Gips auf. Die Papierschicht auf der Oberseite des Kartons ist gelblich gefärbt. Der Karton weist eine Grammatur von 190 g/m² auf.

Es hat sich gezeigt, dass der wie vorstehend beschrieben mit Gips gefüllte Gelbkarton wesentlich besser mit dem Gipskern verbunden werden konnte und sich sowohl in noch nassem Zustand des Gipskerns als auch bei der gebrauchsfähigen Gipsplatte eine deutlich erhöhte Anhaftung am Gipskern ergab.

Gemäß einem Ausführungsbeispiel eines nicht erfindungsgemäßen Kartons wird ein Graukarton hergestellt, der drei Papierschichten aufweist. Hierbei sind alle Papierschichten auf gleiche Weise hergestellt worden, wobei jeweils dem Cellulose-Brei Gips beigemischt wurde. Der Karton weist eine Grammatur von 170 g/m² auf, es werden keine Farbstoffe verwendet.

Der zuvor beschriebene Graukarton wird auf der Rückseite der Gipsplatte angeordnet. Durch die Gipsfüllung in allen drei Schichten ergibt sich hierbei eine besonders intensive Verwachsung mit dem Gips des Gipskerns, insbesondere ist es möglich, dass Gipsnadeln durch mehrere Schichten hindurch mit aus dem Gipskern heraus gewachsenen Gipsnadeln verwachsen und somit eine besonders stabile Verwachsung bilden.

## Patentansprüche

1. Verfahren zur Herstellung eines Kartons ausgehend von einem Brei mit Cellulosefasern, wobei
- dem Brei vor der Kartonbildung Gips beigemischt wird und
- das aus dem Brei gebildete Karton bei einer Temperatur von über 110°C, insbesondere bei einer Temperatur von über 130°C getrocknet wird, so dass sich im Karton Calciumsulfat Hemihydrat bildet,
**dadurch gekennzeichnet, dass** der Karton mehrere Lagen aufweist und die mehreren Lagen des Kartons unterschiedliche Calciumsulfat Hemihydrat-Anteile aufweisen

2. Verfahren nach Anspruch 1, **dadurch gekennzeichnet, dass** es sich bei der Trocknung bei über 110°C um einen Verfahrensschritt der Kartonbildung handelt.

3. Verfahren nach Anspruch 1 oder 2, **dadurch gekennzeichnet, dass** der getrocknete Karton bezogen auf das Gewicht einen Anteil Calciumsulfat Hemihydrat im Bereich von 10% bis 90%, vorzugsweise im Bereich 20% bis 60%, weiter vorzugsweise im Bereich 25% bis 35%, aufweist.

4. Verfahren nach einem der Ansprüche 1 bis 3, **dadurch gekennzeichnet, dass** dem Brei vor der Kartonbildung Gips in Form einer gesättigten Gipssuspension beigemischt wird.

5. Verfahren nach Anspruch 4, **dadurch gekennzeichnet, dass** es sich bei der gesättigten Gipssuspension um eine kontinuierlich gerührte Gipssuspension handelt, wobei die Gipskonzentration im Bereich von 10% bis 70%, vorzugsweise im Bereich von 30% bis 50%, liegt.

6. Verfahren nach einem der Ansprüche 1 bis 5, **dadurch gekennzeichnet, dass** dem Brei Stärke und/oder Latex zur Modifikation zugesetzt werden.

7. Verfahren nach einem der Ansprüche 1 bis 6, **dadurch gekennzeichnet, dass** der Gips gemahlener oder ungemahlener REA-Gips oder gemahlener Naturgips oder eine Mischung hieraus ist.

8. Verfahren nach einem der Ansprüche 1 bis 7, **dadurch gekennzeichnet, dass** der Gips über ein Retentionsmittel, insbesondere kationisches Polyacrylamid, an die Cellulosefasern gebunden wird.

9. Verfahren nach einem der Ansprüche 1 bis 8, **dadurch gekennzeichnet, dass** der Gips elektrostatisch an die Cellulosefasern gebunden wird.

10. Karton, vorzugsweise hergestellt nach einem der Ansprüche 1 bis 9, insbesondere zur Verwendung in einer Gipskartonplatte, **dadurch gekennzeichnet, dass** der getrocknete Karton bezogen auf das Gewicht einen Calciumsulfat Hemihydrat-Anteil im Bereich von 10% bis 90%, vorzugsweise im Bereich von 20 % bis 60 %, insbesondere im Bereich von 25 % bis 35 %, aufweist, der Karton mehrere Lagen aufweist und die mehreren Lagen des Kartons unterschiedliche Calciumsulfat Hemihydrat-Anteile aufweisen.

11. Karton nach Anspruch 10, **dadurch gekennzeichnet, dass** der Karton eine Grammatur im Bereich von 160 - 230 g/m² aufweist.

12. Karton nach Anspruch 10 oder 11, **dadurch gekennzeichnet, dass** eine Lage, die sich an der Oberfläche des Kartons befindet, einen höchsten Anteil an Calciumsulfat Hemihydrat aufweist.

13. Gipsplatte, umfassend einen Gipskern, und zumindest ein an dem Gipskern angebrachter Karton nach einem der Ansprüche 10 bis 12.

14. Gipsplatte nach Anspruch 13, **dadurch gekennzeichnet, dass** der an dem Gipskern angebrachte Karton auf der dem Gipskern zugewandten Seite eine Lage mit einem höchsten Anteil an Calciumsulfat Hemihydrat aufweist.

15. Verfahren zur Herstellung einer Gipsplatte, mit den Schritten:
- Formen eines Gipskerns aus einer Stuckgips-Slurry,
- Bereitstellen eines Kartons nach einem der Ansprüche 10 bis 12,
- Herstellen einer Gipsplatte aus dem Gipskern und dem Karton, wobei die die Gipsslurry ummantelnden Kartonbahnen stuckgipsgesättigtes Wasser aus der Gipsslurry aufsaugen und sich hierbei die im Karton befindlichen Stuckgipskörner unter Ausbildung von "Linker-Kristallen" in Calciumsulfat-Dihydrat umwandeln, wobei parallel hierzu Calciumsulfat-Dihydrat aus der stuckgipsgesättigten Lösung kristallisiert und wobei die sich im Karton ausbildenden Linker-Kristalle als Kristallisationskeime fungieren.

## Claims

1. A method for producing a cardboard based on a slurry with cellulose fibres, wherein
- gypsum is added to the slurry prior to the formation of the cardboard, and
- the cardboard formed from the slurry is dried at a temperature of more than 110°C, especially at a temperature of more than 130°C, so that calcium sulphate hemihydrate is formed,
**characterized in that** the cardboard comprises multiple layers, and the multiple layers of the cardboard have different proportions of calcium sulphate hemihydrate.

2. A method according to claim 1, **characterized in that** the drying at more than 110°C represents a method step for forming the cardboard.

3. A method according to claim 1 or 2, **characterized in that** the dried cardboard, relating to the weight, has a proportion of calcium sulphate hemihydrate in the range of 10% to 90%, preferably in the range of 20% to 60%, more preferably in the range of 25% to 35%.

4. A method according to one of the claims 1 to 3, **characterized in that** gypsum is added in form of a saturated gypsum suspension to the slurry prior to the formation of the cardboard.

5. A method according to claim 4, **characterized in that** the saturated gypsum suspension is constituted by a continuously stirred gypsum suspension, wherein the gypsum concentration lies in the range of 10% to 70%, preferably in the range of 30% to 50%.

6. A method according to one of the claims 1 to 5, **characterized in that** starch and/or latex are added to the slurry for modification.

7. A method according to one of the claims 1 to 6, **characterized in that** the gypsum is ground or non-ground FGD gypsum or ground natural gypsum or a mixture thereof.

8. A method according to one of the claims 1 to 7, **characterized in that** the gypsum is bonded to the cellulose fibres via a retention agent, especially cationic polyacrylamide.

9. A method according to one of the claims 1 to 8, **characterized in that** the gypsum is bonded electrostatically to the cellulose fibres.

10. A cardboard, preferably produced according to one of the claims 1 to 9, especially for use in a gypsum plasterboard, **characterized in that** the dried cardboard, relating to the weight, has a proportion of calcium sulphate hemihydrate in the range of 10% to 90%, preferably in the range of 20% to 60%, especially in the range of 25% to 35%, the cardboard comprises multiple layers, and the multiple layers of the cardboard have different proportions of calcium hemihydrate.

11. A cardboard according to claim 10, **characterized in that** the cardboard has a grammage in the range of 160 to 230 g/m².

12. A cardboard according to claim 10 or 11, **characterized in that** a layer disposed on the surface of the cardboard has the highest proportion of calcium sulphate hemihydrate.

13. A gypsum plasterboard, comprising a gypsum core, and at least one cardboard according to one of the claims 10 to 12 that is attached to the gypsum core.

14. A gypsum plasterboard according to claim 13, **characterized in that** the cardboard attached to the gypsum core has a layer with the highest proportion of calcium hemihydrate on the side facing the gypsum core.

15. A method for producing a gypsum plasterboard, comprising the following steps:
- forming a gypsum core from a hemihydrate plaster slurry,
- providing a cardboard according to one of the claims 10 to 12,
- producing a gypsum plasterboard from the gypsum core and the cardboard, wherein the cardboard webs surrounding the gypsum slurry absorb water saturated with hemihydrate plaster from the gypsum slurry, and the grains of hemihydrate plaster disposed in the cardboard, upon formation of "linker crystals", are converted to calcium sulphate dihydrate , wherein at the same time calcium sulphate dihydrate from the solution saturated with hemihydrate plaster crystallises, and wherein the linker crystals that are formed in the cardboard act as crystallisation seeds.

## Revendications

1. Procédé pour la fabrication d'un carton à partir d'une bouillie de fibres de cellulose, dans lequel
- du plâtre est ajouté à la bouillie avant la production du carton et
- le carton produit à partir de la bouillie est séché à une température supérieure à 110 °C, en particulier à une température supérieure à 130 °C, de sorte du sulfate de calcium semi-hydraté se forme dans le carton,
**caractérisé en ce que** le carton comporte plusieurs couches et les multiples couches du carton contiennent des proportions différentes de sulfate de calcium semi-hydraté.

2. Procédé selon la revendication 1, **caractérisé en ce que** le séchage à plus de 110 °C est une étape de procédé dans la production du carton.

3. Procédé selon la revendication 1 ou 2, **caractérisé en ce que** le carton séché contient une proportion du poids de sulfate de calcium semi-hydraté comprise entre 10 % et 90 %, de préférence entre 20 % et 60 %, en particulier entre 25 % et 35 %.

4. Procédé selon l'une des revendications 1 à 3, **caractérisé en ce qu'**avant la production du carton, la bouillie est additionnée de plâtre sous la forme d'une suspension de plâtre saturée.

5. Procédé selon la revendication 4, **caractérisé en ce que** la suspension de plâtre saturée est une suspension de plâtre agitée constamment, dans laquelle la concentration de plâtre est comprise entre 10 % et 70 %, de préférence entre 30 % et 50 %.

6. Procédé selon l'une des revendications 1 à 5, **caractérisé en ce que** la bouillie est additionnée d'amidon et/ou de latex pour la modifier.

7. Procédé selon l'une des revendications 1 à 6, **caractérisé en ce que** le plâtre est du plâtre REA broyé ou non broyé ou du gypse broyé ou un mélange des deux.

8. Procédé selon l'une des revendications 1 à 7, **caractérisé en ce que** le plâtre est lié aux fibres de cellulose par un agent de rétention, en particulier du polyacrylamide cationique.

9. Procédé selon l'une des revendications 1 à 8, **caractérisé en ce que** le plâtre est lié électrostatiquement aux fibres de cellulose.

10. Carton, de préférence fabriqué selon l'une des revendications 1 à 9, en particulier destiné à être utilisés dans une plaque de plâtre cartonné, **caractérisé en ce que** le carton contient une proportion du poids de sulfate de calcium semi-hydraté comprise entre 10 % et 90 %, de préférence entre 20 % et 60 %, en particulier entre 25 % et 35 %, le carton comporte plusieurs couches et les multiples couches du carton contiennent des proportions différentes de sulfate de calcium semi-hydraté.

11. Carton selon la revendication 10, **caractérisé en ce que** son grammage est compris entre 160 et 230 g/m².

12. Carton selon la revendication 10 ou 11, **caractérisé en ce qu'**une couche se trouvant à la surface du carton présente la plus forte proportion de sulfate de calcium semi-hydraté.

13. Plaque de plâtre comprenant un corps en plâtre et au moins un carton selon l'une des revendications 10 à 12 appliqué sur le corps en plâtre.

14. Plaque de plâtre selon la revendication 13, **caractérisé en ce que** le carton appliqué sur le corps en plâtre présente sur son côté tourné vers le corps en plâtre sa couche contenant la plus forte proportion de sulfate de calcium semi-hydraté.

15. Procédé pour la fabrication d'une plaque de plâtre, comprenant les étapes de :
- formage d'un corps en plâtre à partir d'une barbotine de plâtre de moulage ;
- préparation d'un carton selon l'une des revendications 10 à 12 ;
- fabrication d'une plaque de plâtre à partir du corps en plâtre et du carton, lors de laquelle les lés de carton enveloppant la barbotine de plâtre aspirent l'eau saturée d'eau de plâtre de la barbotine et transforment en ce faisant les grains de plâtre de moulage contenus dans le carton en formant des « cristaux liants » de sulfate de calcium dihydraté, du sulfate de calcium dihydraté cristallisant parallèlement à partir de la solution saturée de plâtre de moulage et les cristaux liants qui se forment dans le carton faisant office de germes de cristallisation.
